# EUROPEAN PATENT SPECIFICATION

(11) **EP 4 057 780 B1**
(45) Date of publication and mention of the grant of the patent: **08.07.2026**
(21) Application number: 21161777.4
(22) Date of filing: 10.03.2021
(51) Int. Cl.: H05B 47/21, H02J 9/06, H02J 7/00, H05B 47/175, H05B 47/19

(54) **METHOD FOR ESTIMATING THE CONDITION OF EMERGENCY LIGHTING DEVICES**
VERFAHREN ZUR SCHÄTZUNG DES ZUSTANDES VON NOTBELEUCHTUNGSVORRICHTUNGEN
PROCÉDÉ D'ESTIMATION DE L'ÉTAT DE DISPOSITIFS D'ÉCLAIRAGE D'URGENCE

(43) Date of publication of application: 14.09.2022
(73) Proprietor: Tridonic GmbH & Co. KG, 6851 Dornbirn (AT)
(72) Inventor: Wilson, Ian, 6850 Dornbirn (AT)
(74) Representative: Beder, Jens

(56) References cited:
- EP-A1- 3 541 148
- DE-A1- 102016 210 413
- GB-A- 2 534 901
- GB-A- 2 569 230
- US-A1- 2020 103 465
- US-A1- 2020 161 893

## Description

The invention relates to a lighting system and a method, with which the technical functioning and operability of components of the lighting system is monitored. More specifically, the invention relates to an emergency lighting system, in which status and functionality of emergency lighting devices is estimated.

In emergency lighting systems, converter devices (converters, ballasts, driver devices) are used for providing a supply voltage and/or current to an emergency light for a predetermined time in case mains supply fails. The voltage supply is maintained in case of a mains supply failure for a rated service time using energy stored in an energy storage device such as a rechargeable battery. The rated service time defines a battery discharge duration during which time the emergency converter is required to drive the emergency light with a predetermined drive current.

The functionality of the emergency lighting system has to be tested at predefined intervals by performing functional tests, wherein the results have to be protocolled. Such tests can be carried out automatically with some DALI lighting systems.

US 2020/161893 A1 discloses automated testing of lighting units relating to power failure simulations. A method there includes steps for receiving an interrupt command, terminating power delivery from a first power supply to a lighting array in response to the interrupt command, and measuring one or more power characteristics of the second power supply.

US 2020/103465 A1 discloses systems and methods for a diagnostic lighting device. The lighting device can comprise a plurality of headlamps, a rechargeable battery, and a controller. The controller there can be configured to perform one or more diagnostic tests.

EP 3 391 713 A1 and DE 10 2016 210413 A1 of the same patent family disclose an emergency lighting system, in which the tests are carried out autonomously by the emergency lighting devices and, if necessary, protocol data of the test stored in the emergency lighting device are read out by a control device.

However, the commands, controllers and protocol data of the prior art are not suitable to detect developing problems, to determine causes of failure or to estimate remaining lifetime.

It is an object of the present invention to overcome the above mentioned drawbacks and to provide an improved lighting system. More specifically, it is an object of the invention to provide a lighting system and a method, with which the condition of components of the lighting system can be estimated with low effort and costs.

This object is achieved by a system and a method according to the enclosed independent claims 1 and 5 respectively.

Advantageous features of the present invention are defined in the corresponding subclaims.

According to the present disclosure, the lighting system comprises at least one converter device and a control device configured to interpret and recognize failure patterns or other problems associated with the operation of the converter device or its peripheral components. More specifically, the at least one converter device is configured to provide a supply voltage and/or current to an illuminant, to detect an operating status and/or an operating condition of the at least one converter device and to store device information indicating the detected operating status and/or the detected condition and the control device is configured to receive the device information, to predict a malfunction of the at least one converter device based on the device information and/or to determine a malfunction of the at least one converter device and at least one operating condition causal to the determined malfunction based on the device information.

The predicted malfunction indicates time and/or type of the malfunction and the at least one operating condition can be an operating condition detected by the converter device or another operating condition assigned to the determined malfunction. The lighting system can comprise a plurality of the converter devices, wherein the prediction of the malfunction and determination of operating condition can be based on device information obtained from the plurality of the converter devices.

In order to detect developing problems, the at least one converter device can be configured to detect the operating status and/or the operating condition periodically and/or at predetermined events and to store the device information indicating detection time of the operating status and/or the operating condition.

The device information can be transmitted from the at least one converter device to the control device via a wireless network, a bus system, in particular, a DALI-bus, or Power-line communication (PLC).

In addition or alternatively, the at least one converter device can comprise a wired or wireless interface configured to output the device information. In this way, the device information can be read out even if the network or the bus system is offline or the at least one converter device is disconnected from the network or the bus system. Further, the wireless interface can be an NFC reader/writer (transponder) configured to store the device information so that the device information can be read out even if the converter device is not operating or is defective. The control device or a mobile reading device connectable to the control device reads out the device information stored in NFC reader/writer.

The control device can be configured to request the device information from the at least one converter device periodically and/or at predetermined events, the period for request the device information can be longer than the period for detecting operating statuses and conditions.

In addition or alternatively, the control device can be configured to predict the malfunction and/or to determine the at least one operating condition using a table or a machine learned model. The table and the machine learned model assign different operating statuses and/or different operating conditions or different sequences of operating statuses and/or operating conditions to one of a plurality of classes, wherein each class corresponds to a predetermined malfunction or a predetermined operating condition.

The at least one converter device can be an emergency converter configured to provide a supply voltage and/or current to an emergency light using energy stored in an energy storage device, wherein the operating status includes/indicates at least one of a test operation of the emergency light, a result of the test operation (e.g., determined error), the charge process and discharge process of the energy storage device, the operating condition includes at least one of temperature of the energy storage device, charging duration, discharge duration and number of charge cycles and the control device is configured to predict, based on the device information, when the energy storage device needs replacement before failure. The device information can be transmitted from the emergency converter to the control device during test, in which the functionality of the emergency lighting system is tested as described above, or after the test is completed.

According to the present disclosure, the method for estimating the condition of components of a lighting system comprises the steps of:
- detecting an operating status and/or an operating condition of the component by a converter device, wherein the converter device is a part the component and is configured to provide a supply voltage and/or current to an illuminant;
- storing of device information indicating the detected operating status and/or the detected condition by the converter device;
- transferring the stored device information to a control device; and
- predicting, by the control device, a malfunction of the component based on the device information; and/or
- determining, by the control device, a malfunction of the component and at least one operating condition causal to the determined malfunction based on the device information.

In the detecting step, the operating status and/or the operating condition can be detected periodically and/or at predetermined events, wherein in the storage step, the device information indicating detection time of the operating status and/or the operating condition is stored.

In the transferring step, the device information can be transmitted from the at least one converter device to the control device via a DALI-bus or PLC using a PLC-interface connected to the power line in the control device and the converter device (component). Alternatively, the transferring step can be performed wirelessly, for example, based on Bluetooth or another wireless communication protocol. Preferably, the transferring step is performed periodically and/or at predetermined events.

In the storage step, the device information can be stored in NFC reader/writer - more precisely in the EEPROM of the NFC-chip, wherein in the transferring step, the device information stored in NFC reader/writer is read out by the control device or a storage device connectable to the control device.

In addition or alternatively, the malfunction can be predicted and/or the at least one operating condition can be determined using a table or a machine learned model. The table and the machine learned model assign different operating statuses and/or different operating conditions or different sequences of operating statuses and/or operating conditions to one of a plurality of classes, wherein each class corresponds to a predetermined malfunction or a predetermined operating condition.

The converter device can be an emergency converter configured to provide a supply voltage and/or current to an emergency light using energy stored in an energy storage device, wherein the operating status includes at least one of a test operation of the emergency light, a result of test operation, the charge process and discharge process of the energy storage device, the operating condition includes at least one of a temperature of the energy storage device, charging duration, discharge duration and number of charge cycles and the method further comprises the step of predicting, by the control device, when the energy storage device needs replacement before failure based on the device information.

Embodiments of the invention are discussed in detail with reference to the enclosed figures, in which
FIG. 1 shows a lighting system according an embodiment of the present invention,
FIG. 2 shows a schematic structural diagram of a control device shown in FIG. 1, and
FIG. 3 shows a schematic structural diagram of an emergency lighting device shown in FIG. 1, and
FIG. 4 shows a flowchart of the method according to an embodiment of the present invention.

In the figures, same reference numbers denote same or equivalent structures. The explanation of structures with same reference numbers in different figures is avoided where deemed possible for sake of conciseness.

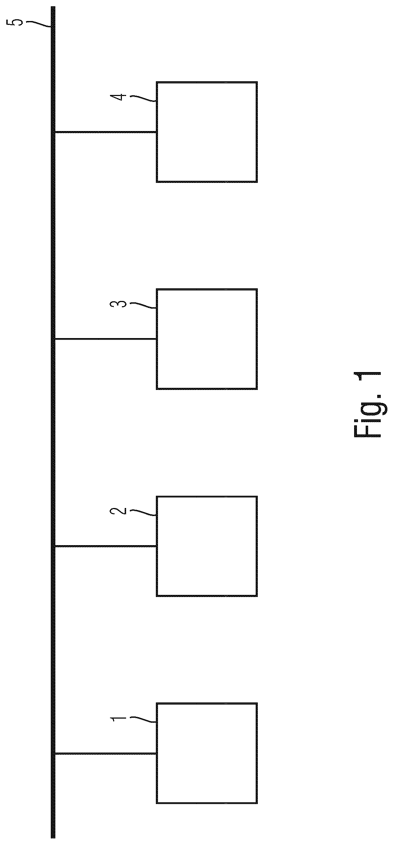

FIG. 1 shows a DALI lighting system according to a first embodiment of the present invention. The DALI lighting system shown in FIG. 1 comprises a controlling device 1, emergency lighting devices 2..4 and a DALI-Bus 5, which connects the controlling device 1 and the emergency lighting devices 2..4. Of course, additional devices may be comprised by the DALI lighting system.

The controlling device 1 performs automatic DALI scanning for device changes and automatic DALI short addressing. In this way, the controlling device 1 detects the emergency lighting devices 2..4 connected to the DALI-Bus 5 based on their production numbers and assigns an address to each of the emergency lighting devices 2..4. Further, the controlling device 1 determines the device types (luminaire and others, if any), stores the addresses and associates the device type information to each address, configures the DALI devices based on stored or received configuration information, controls test operations of the emergency lighting devices 2..4 (a function test and an operational duration test), receives device information of the emergency lighting devices 2..4 and estimates the condition of the emergency lighting devices 2..4 based on the device information.

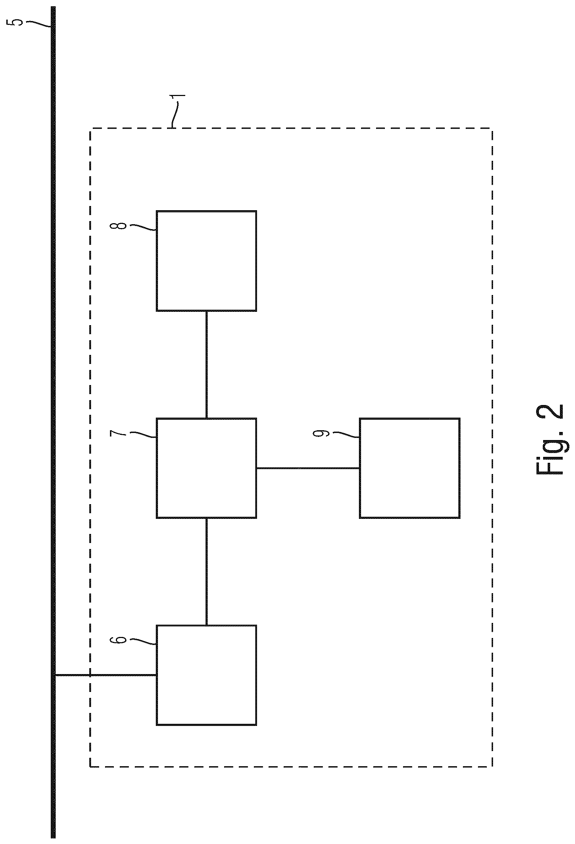

As shown in FIG. 2 the control device 1 comprises an interface 6 for connecting the control device 1 to the DALI-bus 5, a controlling means 7, a storage means 8 (nonvolatile memory) for storing the information described above and an output means 9 configured to output the test results (protocol data) and the results of the estimation performed by the controlling means 7. The output means 9 can be a display, a printer, a graphical user interface or a transmitter that transmits the results to a mobile device, such as a tablet, laptop or smart phone.

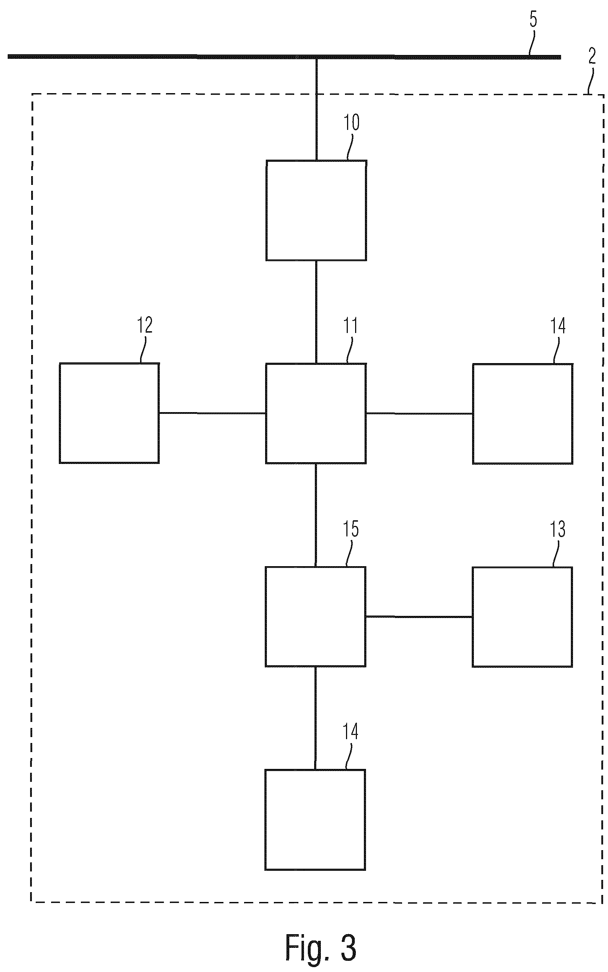

FIG. 3 shows the structure of the emergency lighting device 2, wherein the emergency lighting devices 3 and 4 are structured in the same way. As shown in FIG. 3 the emergency lighting device 2 comprises an interface 10 for connecting the emergency lighting device 2 to the DALI-bus 5, a controlling means 11, a storage means 12 (nonvolatile memory) for storing device information, a rechargeable battery 13, a sensor 14 for detecting the temperature of the rechargeable battery 13, an emergency light 14 (e.g. LED or fluorescent lamp), a converter 15 configured to provide a supply voltage and/or current to the emergency light 14 using mains power (not shown) or energy of the rechargeable battery 13 and a charging unit (not shown) for charging the rechargeable battery 13.

The interface 10, the controlling means 11, the storage means 12 and the converter 15 form an emergency converter, which can be housed in a separate enclosure. The controlling means 11 controls the converter 15 to provide the supply voltage and/or current to the emergency light 14 using the energy of the rechargeable battery 13, when power failure or a test mode is detected by the controlling means 11. The controlling means 7 and/or the controlling means 11 can be a microcontroller or an Application-Specific Integrated Circuit (ASIC).

Further, the controlling means 11 stores, in the storage means 12, information on the result of each test (successful or failed), the number of tests carried out, test duration, number of charge cycles, total operating time of the emergency light 14 and/or the emergency lighting device 2, total operating time in the test mode and/or the battery mode, maximum temperature of the rechargeable battery 13 detected by the sensor 14, average temperature and a violation of a limit value (max and/or min) of the temperature, the battery voltage, the mains voltage, the drive current and the supply voltage and/or current of the emergency light 14 along with date and time of measurement or the actual counter reading of an operating hours counter.

Consequently, information unrelated to testing events is also stored, wherein information about the temperature of the rechargeable battery 13, the battery voltage, the mains voltage, the drive current and the supply voltage is collected continually and independently of tests. The time interval for measuring can be set individually based on the temporal changes of the measurement. For example, the temperature can be measured once a minute.

In addition to supply conditions and driver conditions also environmental conditions like humidity and/or temperature may be obtained and stored. The data may be stored during normal operation and in an emergency mode.

Each emergency lighting device 2..4 collects such device information and transmits the stored device information to the control device 1 via the DALI-bus 5 periodically (e.g. once a week). Alternatively, the controlling device 1 can be configured to request the device information or part thereof using memory bank commands of DALI.

The controlling device 1 stores the received device information, determines, for each emergency lighting device 2..4, a malfunction of the emergency lighting device 2..4 (e.g. function test fail, duration test fail, defective emergency light 14, low battery and/or supply voltage and/or current to high/low) and the operating conditions (e.g. too many charging cycles, battery temperature is to high/low, mains voltage is to high/low) causal to the determined malfunction and outputs the results of the determination so that the malfunction and/or the operating condition can be corrected by the user. Alternatively or in addition, the controlling device 1 can change the configuration information or other parameters of the emergency lighting device 2..4 to correct/adapt the respective operating condition in order to prevent a recurrence of the malfunction.

Further, the control device 1 is configured to predict the malfunction so that the malfunction can be prevented by timely replacement of the affected component (e.g. replacing the rechargeable battery 13 or the emergency light 14) and/or by the correction of the respective operating condition by the user or the control device 1.

The determination of the incorrect operating condition(s) and the prediction of the malfunction are performed using a table or a model that was trained by machine learning in advance. The machine learned model assigns different sequences of operating statuses and/or operating conditions to one of a plurality of classes, wherein each class corresponds to a predetermined malfunction or a predetermined (incorrect) operating condition. A sequence of operating statuses corresponds, for example, to a chronology of network operations, battery operations, function tests, duration tests, shutdowns or a combination thereof, whereas a sequence of operating conditions represents the temporal course of measurements and/or counters.

Machine learning itself is a well-known technique, in which a general rule that maps inputs (device information) to outputs (malfunction) is learned based on example inputs during a training phase and their desired outputs. The table or model is generated by the manufacturer or is generated/updated by the controlling means 7 of the controlling device 1 based on the device information received from the emergency lighting device 2..4.

In the lighting system shown in FIG. 1 to FIG. 3, the emergency lighting devices 2..4 transmit the device information to the control device 1 via the DALI-bus 5. Alternatively, each of the emergency lighting devices 2..4 and the control device 1 can comprise a transmitting and receiving means configured to transmit the device information and the configuration information wirelessly via Bluetooth or WLAN. In addition or alternatively, each of the emergency lighting devices 2..4 can comprise an NFC reader/writer (transponder) configured to store the device information so that the device information can be read out when the emergency lighting device 2..4 (the controlling means 11) is not operating or defective, wherein the control device 1 designed as mobile device, such as a tablet, laptop or smart phone is configured to read out the device information stored in NFC reader/writer.

Further, the lighting system can comprise a plurality of the controlling devices 1, wherein at least one of the controlling devices 1 is configured to perform:
- diagnostic analysis, in particular a root cause analysis of failures returned from site, by estimating, for example, supply over-voltage events, thermal/temperature events and/or battery cycling,
- pre-emptive maintenance by detecting developing problems like as battery average temperature too high for lifetime predication, battery temperature outside safe range, too many battery cycles, battery aging, luminaire temperature too high (ITG events) and/or luminaire voltage too high (OVP events),
- support of the customer with root cause analysis at luminaire level on the basis of a luminaire duty cycle & environmental analysis,
- warranty extension (automatic activation) if the number of charge cycles, operating time per day/year, average temperature of driver and/or battery is low,
- support for specification of components including battery & LED based on an analysis of battery operating parameters over lifetime, temperature profiles of drivers in maintained, non-maintained & emergency modes and based on more accuracy in prediction of design life, and/or
- tracking of battery lifetime and/or creating capacity degradation curve in order to determine when battery needs replacement before failure, on basis of the device information.

Preferably, the control device 1 is configured to estimate a warranty extension of the emergency lighting device 2..4 or the battery based on the degradation curve and outputs or stores the result of the estimation. Alternatively or in addition, information on the result can be transmitted to the emergency lighting device 2..4 and stored in the storage means 12 (NFC reader/writer) so that this warranty information can be read out in case of service in a workshop. In order to prevent tampering of warranty information or the device information, the information can be stored in a non-erasable memory of the emergency lighting device 2..4 (e.g. the storage means 12, NFC reader/writer) and/or can be stored in encrypted form. The memory may allow free access of customers and/or control system.

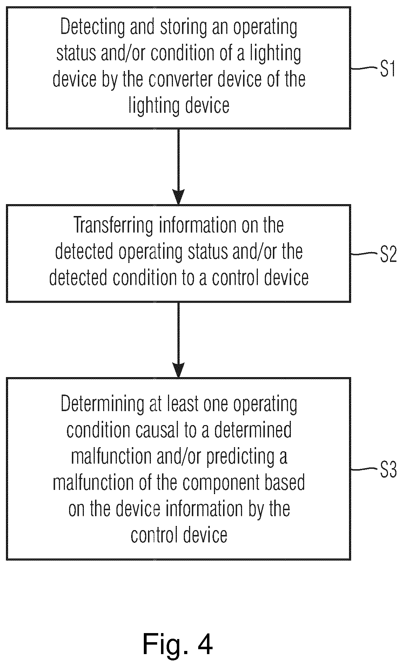

FIG. 4 shows a simplified flowchart showing the single steps performed by the realization of the method described in detail above. In step S1, at least one operating status and/or condition of a lighting device (e.g. the emergency lighting device 2..4) is detected and stored by the converter device of the lighting device. The status and condition can relate to the converter device and/or to its peripheral components (e.g. the rechargeable battery 13 and the illuminant 14). In step S2, information on the detected operating status and/or the detected condition is transferred to the control device 1 on request or at certain times. The control device 1 determines, in step S3, at least one operating condition causal to a determined malfunction and/or predicts a malfunction of the lighting device based on the device information. The steps S1, S2 and S3 can be executed periodically, wherein the period for detecting and storing an operating status/condition is shorter than the period for transferring the stored information, which is equal to or shorter than the period for performing step S3. The results of step S3 can be displayed and/or warning can be outputted dependent on the type and/or time of the predicted malfunction.

Table 1 shows a table containing events and errors (operating statuses) detectable by the converter device,

Table 1 shows a table containing events and errors (operating statuses) and FIG. 5 shows a table containing operating conditions. At least a part of statuses and conditions can be determined and stored by the emergency lighting devices 2..4. It is to be noted that the entries in the table are not exhaustive and may only be understood as examples.

Table 2 shows a table containing operating conditions detectable by the converter device.

**Table 1**

| **Events** | **Errors** |
|---|---|
| Processor power on count | System failure count |
| Processor reset count | Circuit failure count |
| Total lamp operation time | Lamp under voltage count (Ch1 & Ch2) |
| Lamp emergency time | Lamp over voltage count (Ch1 & Ch2) |
| Total unit operation time | Lamp over power count (Ch1 & Ch2) |
| Mains over voltage count | Lamp open circuit count (Ch1 & Ch2) |
| Minimum temperature | Lamp short circuit count (Ch1 & Ch2) |
| Maximum temperature | Battery low temperature faults |
| Maximum mains voltage | Battery high temperature faults |
| Lamp switch on count (Ch1 & Ch2) | Battery low temperature warnings |
| Enter rest mode count | Battery high temperature warnings |
| Enter emergency mode count | Function test fail count |
| Starting function test count | Duration test fail count |
| Battery reaching LVBCO count | Battery fail count |
| Battery average temperature | |
| Count of battery replacements | |
| Battery connection time | |
| Battery maximum temperature | |
| ITG entering T3 count | |
| ITG entering T4 count | |

**Table 2**

| **Section** | **Description** | **Comments** |
|---|---|---|
| System | Count number of System Failure Events | |
| System | Count number of circuit failures detected | All Circuit Failures |
| System | Lamp Operation time | Emergency, Test and Maintained Lamp ON |
| System | Emergency Lamp Operation time | Emergency, Test only Lamp ON |
| System | Total Operation time | Unit lifetime (powered by battery or mains) |
| ITG | Over Temperature T4 | Critical Thermal Level Reached |
| ITG | Over Temperature T3 | High Thermal Level Reached |
| ITG | Minimum Gear Temperature | -128 to 127°C during operational lifetime |
| ITG | Maximum Gear Temperature | -128 to 127°C during operational lifetime |
| Mains | Overvotage inputs detected | Times >260V (approx) |
| Mains | Maximum input voltage | 0 to 255 (2V steps, i.e. 0V to 510V) |
| LED | Lamp Switch On | Includes emergency, test and maintained use |
| LED | Lamp Under Voltage Errors | Wrong Lamp Connected |
| LED | Lamp Over Voltage Errors | Wrong Lamp Connected |
| LED | Lap Over Power Errors | Wrong Lamp Connected (or circuit problem) |
| LED | Lamp Open Circuit Errors | Disconnected Lamp |
| LED | Lamp Short Circuit Errors | Shorted Contacts |
| Battery | Battery High Temperature Faults | Li-Ion Charging Thermal Shutdown (high) |
| Battery | Battery High Temperature Warnings | Li-Ion still Charging but temperature is high |
| Battery | Battery Low Temperature Faults | Li-Ion Charging Thermal Shutdown (low) |
| Battery | Battery Low Temperature Warnings | Li-Ion still Charging but temperature is low |
| Battery | Rest Mode Count | Dali DT1 Rest Mode |
| Battery | Emergency Mode Count | Real Emergency - Not Test |
| Battery | Function Test Count | normally 1/ Week. |
| Battery | Duration Test Count | normally 1 / Year |
| Battery | Failed Function Tests Count | normally 1/ week |
| Battery | Failed Duration Tests Count | normally 1/ year |
| Battery | LVBCO Count | Low Voltage Battery Cut Off |
| Battery | Average Battery Temp | -128 to 127°C during operational lifetime |
| Battery | Min Battery Temp | -128 to 127°C during operational lifetime |
| Battery | Max Battery Temp | -128 to 127°C during operational lifetime |

## Claims

1. A lighting system, comprising
at least one converter device (10, 11, 12, 15) and a control device (1), wherein the at least one converter device (10, 11, 12, 15) is configured:
- to provide a supply voltage and/or current to an illuminant (14),
- to detect one or more operating statuses and/or operating conditions of the at least one converter device, wherein the least one converter device (10, 11, 12, 15) comprises a controlling means (11) and an NFC reader/writer,
wherein the controlling means (11) is configured to store device information indicating the one or more detected operating statuses and/or operating conditions in the NFC reader/writer; and
wherein the NFC reader/writer is configured to output the device information stored in the NFC reader/ writer,
wherein the control device (1) is configured:
- to read out the device information from the NFC reader/writer and
- to determine a malfunction of the at least one converter device,
the lighting system being **characterised in that** the control device (1) is further configured to:
- to predict a malfunction of the at least one converter device based on the device information and
- to determine one or more of the operating conditions causal to the determined malfunction based on the device information.

2. The lighting system according to claim 1, wherein
the at least one converter device (10, 11, 12, 15) is configured to detect the operating statuses and/or the operating conditions periodically and/or at predetermined events and to store the device information indicating detection time of the operating statuses and/or the operating conditions.

3. The lighting system according to any one of claims 1 or 2, wherein
the control device (1) is configured to predict the malfunction and/or to determine the at least one operating condition using a table or a machine learned model; and
the table and the machine learned model assign different operating statuses and/or different operating conditions or different sequences of operating statuses and/or different sequences operating conditions to one of a plurality of classes, wherein each class corresponds to a predetermined malfunction or a predetermined operating condition.

4. The lighting system according to any one of claims 1 to 3, wherein
the at least one converter device (10, 11, 12, 15) is an emergency converter configured to provide the supply voltage and/or current using energy stored in an energy storage device (13);
the operating statuses include at least one of a test operation of the illuminant (14), a result of test operation, charge process and discharge process of the energy storage device (13) and/or the operating conditions include at least one of a temperature of the energy storage device (13), charging duration, discharge duration and number of charge cycles, and
the control device (1) is configured to predict, based on the device information, when the energy storage device (13) needs replacement before failure.

5. Method for estimating the condition of components of a lighting system, wherein at least one of the components (2..4) comprises a converter device (10, 11, 12, 15) comprising a controlling means (11) and an NFC reader/writer, and configured to provide a supply voltage and/or current to an illuminant (14), the method comprising the steps of:
- detecting (S1), by the converter device (10, 11, 12, 15), one or more operating statuses and/or an operating conditions of the at least one component (2..4);
- storing (S1), by the controlling means (11), device information indicating the detected operating statuses and/or the detected operating conditions by the converter device (10, 11, 12, 15) in the NFC reader/writer;
- outputting, by the NFC reader/writer, the device information stored in the NFC reader/writer (orig. cl. 4);
- reading out, by the control device (1), the device information stored in the NFC reader/writer;
- determining (S3), by the control device (1), a malfunction of the at least one component;
**characterised in that** the method further comprises the steps of:
- predicting (S3), by the control device (1), a malfunction of the at least one component (2..4) based on the device information; and
- determining (S3), by the control device (1), one or more of the operating conditions causal to the determined malfunction based on the device information.

6. The method according to claim 5, wherein
in the detecting step (S1), the operating statuses and/or the operating conditions are detected periodically and/or at predetermined events and,
preferably, in the storage step (S1), the device information indicating detection time of the operating statuses and/or the operating conditions is stored.

7. The method according to claim 5 or 6, wherein
in the transferring step (S2), the device information stored in NFC reader/writer is read out by the control device (1) or a storage device connectable to the control device (1).

8. The method according to any one of claims 5 to 7, wherein
the malfunction is predicted and/or the at least one operating condition is determined using a table or a machine learned model; and
the table and the machine learned model assign different operating statuses and/or different operating conditions or different sequences of operating statuses and/or different sequences operating conditions to one of a plurality of classes, wherein each class corresponds to a predetermined malfunction or a predetermined operating condition.

9. The method according to any one of claims 5 to 8, wherein
the illuminant (14) is an emergency light and the converter device (10, 11, 12, 15) is an emergency converter configured to provide the supply voltage and/or current to the emergency light using energy stored in an energy storage device (13);
the operating statuses include at least one of a test operation of the emergency light, a result of test operation, charge process and discharge process of the energy storage device (13) and/or the operating conditions include at least one of temperature of the energy storage device (13), charging duration, discharge duration and number of charge cycles; and the method further comprises the step of:
predicting, by the control device (1) based on the device information, when the energy storage device (13) needs replacement before failure.

## Patentansprüche

1. Beleuchtungssystem, umfassend mindestens ein Betriebsgerät (10, 11, 12, 15) und eine Steuervorrichtung (1),
wobei das mindestens eine Betriebsgerät (10, 11, 12, 15) dazu konfiguriert ist:
- eine Versorgungsspannung und/oder einen Strom an ein Leuchtmittel (14) bereitzustellen;
- einen oder mehrere Betriebszustände und/oder Betriebsbedingungen des mindestens einen Betriebsgeräts zu erfassen;
wobei das mindestens eine Betriebsgerät (10, 11, 12, 15) ein Steuermittel (11) und ein NFC-Lese-/Schreibgerät umfasst;
wobei das Steuermittel (11) dazu konfiguriert ist, Geräteinformationen, welche die erfassten Betriebszustände und/oder Betriebsbedingungen anzeigen, in dem NFC-Lese-/Schreibgerät zu speichern;
wobei das NFC-Lese-/Schreibgerät dazu konfiguriert ist, die in dem NFC-Lese-/Schreibgerät gespeicherten Geräteinformationen auszugeben;
wobei die Steuervorrichtung (1) dazu konfiguriert ist:
- die Geräteinformationen aus dem NFC-Lese-/Schreibgerät auszulesen;
- eine Fehlfunktion des mindestens einen Betriebsgeräts zu bestimmen;
wobei das Beleuchtungssystem **dadurch gekennzeichnet ist, dass** die Steuervorrichtung (1) ferner dazu konfiguriert ist:
- eine Fehlfunktion des mindestens einen Betriebsgeräts auf Grundlage der Geräteinformationen vorherzusagen;
- einen oder mehrere der Betriebsbedingungen, die für die festgestellte Fehlfunktion ursächlich sind, basierend auf den Geräteinformationen zu bestimmen.

2. Beleuchtungssystem nach Anspruch 1, wobei das mindestens eine Betriebsgerät (10, 11, 12, 15) dafür konfiguriert ist, die Betriebszustände und/oder die Betriebsbedingungen periodisch und/oder bei vorbestimmten Ereignissen zu erfassen und Geräteinformationen zu speichern, welche den Zeitpunkt der Erfassung der Betriebszustände und/oder Betriebsbedingungen anzeigen.

3. Beleuchtungssystem nach Anspruch 1 oder 2, wobei
die Steuervorrichtung (1) dazu konfiguriert ist, die Fehlfunktion vorherzusagen und/oder die mindestens eine Betriebsbedingung mittels einer Tabelle oder eines maschinell erlernten Modells zu bestimmen; und
die Tabelle und das maschinell erlernte Modell ordnen unterschiedlichen Betriebszuständen und/oder unterschiedlichen Betriebsbedingungen oder unterschiedlichen Abfolgen von Betriebszuständen und/oder unterschiedlichen Abfolgen von Betriebsbedingungen jeweils eine von mehreren Klassen zu, wobei jede Klasse einer vorbestimmten Fehlfunktion oder einer vorbestimmten Betriebsbedingung entspricht.

4. Beleuchtungssystem nach einem der Ansprüche 1 bis 3, wobei
das mindestens eine Betriebsgerät (10, 11, 12, 15) ein Notlichtbetriebsgerät ist, das dazu konfiguriert ist, die Versorgungsspannung und/oder den Strom unter Verwendung in einer Energiespeichervorrichtung (13) gespeicherter Energie bereitzustellen;
die Betriebszustände mindestens einen der folgenden Zustände umfassen: einen Testbetrieb des Leuchtmittels (14), ein Ergebnis des Testbetriebs, einen Ladevorgang und einen Entladevorgang der Energiespeichervorrichtung (13); und/oder
die Betriebsbedingungen mindestens eine der folgenden Bedingungen umfassen: eine Temperatur der Energiespeichervorrichtung (13), eine Ladedauer, eine Entladedauer und eine Anzahl von Ladezyklen; und
die Steuervorrichtung (1) dazu konfiguriert ist, basierend auf den Geräteinformationen vorherzusagen, wann die Energiespeichervorrichtung (13) vor einem Ausfall ersetzt werden muss.

5. Verfahren zum Abschätzen des Zustands von Komponenten eines Beleuchtungssystems, wobei mindestens eine der Komponenten (2 .. 4) eine Konvertervorrichtung (10, 11, 12, 15) umfasst, die ein Steuermittel (11) und ein NFC-Lese-/Schreibgerät umfasst und dazu konfiguriert ist, eine Versorgungsspannung und/oder einen Strom an ein Leuchtmittel (14) bereitzustellen, wobei das Verfahren folgende Schritte umfasst:
- Erfassen (S1), durch die Konvertervorrichtung (10, 11, 12, 15), einen oder mehrerer Betriebszustände und/oder Betriebsbedingungen der mindestens einen Komponente (2 .. 4);
- Speichern (S1), durch das Steuermittel (11), von Geräteinformationen, welche die erfassten Betriebszustände und/oder Betriebsbedingungen durch die Konvertervorrichtung (10, 11, 12, 15) anzeigen, in dem NFC-Lese-/Schreibgerät;
- Ausgeben, durch das NFC-Lese-/Schreibgerät, der in dem NFC-Lese-/Schreibgerät gespeicherten Geräteinformationen;
- Auslesen, durch die Steuervorrichtung (1), der in dem NFC-Lese-/Schreibgerät gespeicherten Geräteinformationen;
- Bestimmen (S3), durch die Steuervorrichtung (1), einer Fehlfunktion der mindestens einen Komponente;
wobei das Verfahren **dadurch gekennzeichnet ist, dass** das Verfahren ferner folgende Schritte umfasst:
- Vorhersagen (S3), durch die Steuervorrichtung (1), einer Fehlfunktion der mindestens einen Komponente (2 .. 4) basierend auf den Geräteinformationen; und
- Bestimmen (S3), durch die Steuervorrichtung (1), einer oder mehrerer der Betriebsbedingungen, die für die festgestellte Fehlfunktion ursächlich sind, basierend auf den Geräteinformationen.

6. Verfahren nach Anspruch 5, wobei in dem Erfassungsschritt (S1) die Betriebszustände und/oder die Betriebsbedingungen periodisch und/oder bei vorbestimmten Ereignissen erfasst werden und vorzugsweise in dem Speicherschritt (S1) die Geräteinformationen gespeichert werden, welche den Erfassungszeitpunkt der Betriebszustände und/oder der Betriebsbedingungen angeben.

7. Verfahren nach Anspruch 5 oder 6, wobei in dem Übertragungsschritt (S2) die im NFC-Lese-/Schreibgerät gespeicherten Geräteinformationen durch die Steuervorrichtung (1) oder durch eine mit der Steuervorrichtung (1) verbindbare Speichervorrichtung ausgelesen werden.

8. Verfahren nach einem der Ansprüche 5 bis 7, wobei
die Fehlfunktion vorhergesagt wird und/oder die mindestens eine Betriebsbedingung mithilfe einer Tabelle oder eines maschinell erlernten Modells bestimmt wird; und
die Tabelle und das maschinell erlernte Modell ordnen unterschiedlichen Betriebszuständen und/oder unterschiedlichen Betriebsbedingungen oder unterschiedlichen Abfolgen von Betriebszuständen und/oder unterschiedlichen Abfolgen von Betriebsbedingungen jeweils eine von mehreren Klassen zu, wobei jede Klasse einer vorbestimmten Fehlfunktion oder einer vorbestimmten Betriebsbedingung entspricht.

9. Verfahren nach einem der Ansprüche 5 bis 8, wobei
das Leuchtmittel (14) ein Notlicht ist und die Konvertervorrichtung (10, 11, 12, 15) ein Notlichtkonverter ist, der dazu konfiguriert ist, die Versorgungsspannung und/oder den Strom an das Notlicht aus einer in einer Energiespeichervorrichtung (13) gespeicherten Energie bereitzustellen;
die Betriebszustände mindestens einen der folgenden Zustände umfassen: einen Testbetrieb des Notlichts, ein Ergebnis des Testbetriebs, einen Ladevorgang und einen Entladevorgang der Energiespeichervorrichtung (13); und/oder
die Betriebsbedingungen mindestens eine der folgenden Bedingungen umfassen: eine Temperatur der Energiespeichervorrichtung (13), eine Ladedauer, eine Entladedauer und eine Anzahl von Ladezyklen; und
das Verfahren ferner den Schritt umfasst:
durch die Steuervorrichtung (1) basierend auf den Geräteinformationen vorherzusagen, wann die Energiespeichervorrichtung (13) vor einem Ausfall ausgetauscht werden muss.

## Revendications

1. Système d'éclairage comprenant au moins un dispositif de conversion (10, 11, 12, 15) et un dispositif de commande (1),
ledit au moins un dispositif de conversion (10, 11, 12, 15) étant configuré pour:
- fournir une tension d'alimentation et/ou un courant à une source lumineuse (14);
- détecter un ou plusieurs états et/ou conditions de fonctionnement dudit au moins un dispositif de conversion;
ledit au moins un dispositif de conversion (10, 11, 12, 15) comprenant un moyen de commande (11) et un lecteur/enregistreur NFC;
le moyen de commande (11) étant configuré pour stocker, dans le lecteur/enregistreur NFC, des informations de dispositif indiquant les états et/ou conditions de fonctionnement détectés;
le lecteur/enregistreur NFC étant configuré pour délivrer les informations de dispositif stockées dans le lecteur/enregistreur NFC;
le dispositif de commande (1) étant configuré pour :
- lire les informations de dispositif depuis le lecteur/enregistreur NFC;
- déterminer un dysfonctionnement dudit au moins un dispositif de conversion;
le système d'éclairage étant **caractérisé en ce que** le dispositif de commande (1) est en outre configuré pour :
- prédire un dysfonctionnement dudit au moins un dispositif de conversion sur la base des informations de dispositif;
- déterminer une ou plusieurs des conditions de fonctionnement à l'origine du dysfonctionnement déterminé sur la base des informations de dispositif.

2. Système d'éclairage selon la revendication 1, dans lequel ledit au moins un dispositif de conversion (10, 11, 12, 15) est configuré pour détecter les états et/ou les conditions de fonctionnement de façon périodique et/ou lors d'événements prédéterminés, et pour stocker des informations de dispositif indiquant l'instant de détection desdits états et/ou conditions de fonctionnement.

3. Système d'éclairage selon l'une des revendications 1 ou 2, dans lequel
le dispositif de commande (1) est configuré pour prédire le dysfonctionnement et/ou déterminer ladite au moins une condition de fonctionnement à l'aide d'un tableau ou d'un modèle appris par apprentissage automatique; et
le tableau et le modèle appris par apprentissage automatique attribuent différents états de fonctionnement et/ou différentes conditions de fonctionnement ou différentes séquences d'états de fonctionnement et/ou différentes séquences de conditions de fonctionnement à l'une de plusieurs classes, chaque classe correspondant à un dysfonctionnement prédéterminé ou à une condition de fonctionnement prédéterminée.

4. Système d'éclairage selon l'une des revendications 1 à 3, dans lequel
ledit au moins un dispositif de conversion (10, 11, 12, 15) est un convertisseur de secours configuré pour fournir la tension d'alimentation et/ou le courant en utilisant l'énergie stockée dans un dispositif de stockage d'énergie (13);
les états de fonctionnement comprennent au moins l'un d'un fonctionnement de test de la source lumineuse (14) , d'un résultat de fonctionnement de test, d'un processus de charge et d'un processus de décharge du dispositif de stockage d'énergie (13) , et/ou les conditions de fonctionnement comprennent au moins l'une d'une température du dispositif de stockage d'énergie (13) , d'une durée de charge, d'une durée de décharge et d'un nombre de cycles de charge; et
le dispositif de commande (1) est configuré pour prédire, sur la base des informations de dispositif, le moment auquel le dispositif de stockage d'énergie (13) doit être remplacé avant une défaillance.

5. Méthode pour estimer l'état de composants d'un système d'éclairage, dans laquelle au moins un des composants (2 .. 4) comprend un dispositif de conversion (10, 11, 12, 15) comportant un moyen de commande (11) et un lecteur/enregistreur NFC, et étant configuré pour fournir une tension d'alimentation et/ou un courant à une source lumineuse (14), ladite méthode comprenant les étapes consistant à :
- détecter (S1), par le dispositif de conversion (10, 11, 12, 15), un ou plusieurs états et/ou conditions de fonctionnement dudit au moins un composant (2 .. 4);
- stocker (S1), par le moyen de commande (11), des informations de dispositif indiquant les états de fonctionnement et/ou les conditions de fonctionnement détectés par le dispositif de conversion (10, 11, 12, 15) dans le lecteur/enregistreur NFC;
- délivrer, par le lecteur/enregistreur NFC, les informations de dispositif stockées dans le lecteur/enregistreur NFC;
- lire, par le dispositif de commande (1), les informations de dispositif stockées dans le lecteur/enregistreur NFC;
- déterminer (S3), par le dispositif de commande (1), un dysfonctionnement dudit au moins un composant;
la méthode étant **caractérisée en ce qu'**elle comprend en outre les étapes consistant à :
- prédire (S3), par le dispositif de commande (1), un dysfonctionnement dudit au moins un composant (2 .. 4) en se basant sur les informations de dispositif; et
- déterminer (S3), par le dispositif de commande (1), une ou plusieurs des conditions de fonctionnement à l'origine du dysfonctionnement déterminé en se basant sur les informations de dispositif.

6. Méthode selon la revendication 5, dans laquelle lors de l'étape de détection (S1), les états et/ou conditions de fonctionnement sont détectés de façon périodique et/ou lors d'événements prédéterminés et, de préférence, lors de l'étape de stockage (S1), les informations de dispositif indiquant le moment de détection des états et/ou conditions de fonctionnement sont stockées.

7. Méthode selon la revendication 5 ou 6, dans laquelle lors de l'étape de transfert (S2), les informations de dispositif stockées dans le lecteur/enregistreur NFC sont lues par le dispositif de commande (1) ou par un dispositif de stockage pouvant être connecté au dispositif de commande (1).

8. Méthode selon l'une des revendications 5 à 7, dans laquelle
le dysfonctionnement est prédit et/ou ladite au moins une condition de fonctionnement est déterminée à l'aide d'un tableau ou d'un modèle appris par apprentissage automatique; et
le tableau et le modèle appris par apprentissage automatique associent différents états de fonctionnement et/ou différentes conditions de fonctionnement ou différentes séquences d'états de fonctionnement et/ou différentes séquences de conditions de fonctionnement à l'une de plusieurs classes, chaque classe correspondant à un dysfonctionnement prédéterminé ou à une condition de fonctionnement prédéterminée.

9. Méthode selon l'une des revendications 5 à 8, dans laquelle
la source lumineuse (14) est une lampe de secours et le dispositif de conversion (10, 11, 12, 15) est un convertisseur de secours configuré pour fournir la tension d'alimentation et/ou le courant à la lampe de secours en utilisant l'énergie stockée dans un dispositif de stockage d'énergie (13);
les états de fonctionnement comprennent au moins l'un d'un fonctionnement de test de la lampe de secours, d'un résultat de fonctionnement de test, d'un processus de charge et d'un processus de décharge du dispositif de stockage d'énergie (13); et/ou
les conditions de fonctionnement comprennent au moins l'une d'une température du dispositif de stockage d'énergie (13), d'une durée de charge, d'une durée de décharge et d'un nombre de cycles de charge; et
la méthode comprend en outre l'étape consistant à prédire, par le dispositif de commande (1), sur la base des informations de dispositif, le moment auquel le dispositif de stockage d'énergie (13) doit être remplacé avant une défaillance.
